# EUROPEAN PATENT SPECIFICATION

(11) **EP 4 273 981 B1**
(45) Date of publication and mention of the grant of the patent: **29.07.2026**
(21) Application number: 22899056.0
(22) Date of filing: 24.11.2022
(51) Int. Cl.: H01M 10/04, H01M 50/30, H01M 10/0587, H01M 10/052, H01M 10/42, H01M 10/654, C09J 7/22

(54) **JELLY-ROLL ELECTRODE ASSEMBLY AND SECONDARY BATTERY COMPRISING THE SAME**
JELLY-ROLL-ELEKTRODENANORDNUNG UND SEKUNDÄRBATTERIE, DIE DIESE UMFASST
ENSEMBLE ÉLECTRODE DE TYPE ROULEAU ET BATTERIE SECONDAIRE LE COMPRENANT

(30) Priority: 24.11.2021 KR 20210163386; 23.11.2022 KR 20220158762
(43) Date of publication of application: 08.11.2023
(73) Proprietor: LG Energy Solution, Ltd., Seoul 07335 (KR)
(72) Inventor: PARK, Inbok, Daejeon 34122 (KR); KIM, Kwan Won, Daejeon 34122 (KR)
(74) Representative: Goddar, Heinz J.
(86) International application number: PCT/KR2022/018725
(87) International publication number: WO 2023/096374

(56) References cited:
- EP-B1- 2 171 790
- JP-A- 2001 273 933
- JP-B2- 6 928 918
- KR-A- 20170 138 670
- KR-A- 20210 004 102
- KR-A- 20210 004 102
- KR-B1- 101 254 800
- US-A1- 2018 316 045
- US-A1- 2020 044 276
- US-B2- 10 658 650
- US-B2- 7 118 824
- US-B2- 9 755 207

## Description

### [TECHNICAL FIELD]

The present disclosure relates to a jelly-roll electrode assembly and a secondary battery comprising the same.

### [BACKGROUND]

With the technology development and increased demand for mobile devices, demand for secondary batteries as energy sources have been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Based on the shape of the battery case, a secondary battery is classified into a cylindrical battery where an electrode assembly is mounted in a cylindrical metal can, a prismatic battery where an electrode assembly is mounted in a prismatic metal can, and a pouch-type battery where an electrode assembly is mounted in a pouch type case formed of an aluminum laminate sheet. Among them, the cylindrical battery has an advantage that it has a relatively large capacity and is structurally stable.

The electrode assembly mounted in the battery case is an electricity-generating device enabling charge and discharge that has a cathode/separator/anode laminate structure, and is classified into a jelly-roll type, a stack type, and a stack/folding type. The jelly-roll type is a shape in which a cathode and an anode, each made of an active material-coated long sheet, is rolled with a separator interposed between them, the stack type is a shape in which a plurality of cathodes and a plurality of anodes each having a predetermined size are sequentially stacked in a state where a separator is interposed therebetween, and a stack/folding type is a combination of a jelly-roll type and a stack type. Of these, the jelly-roll-type electrode assembly has advantages that manufacture is easy and the energy density per weight is high.

Therefore, in recent years, as the need for batteries to achieve high capacity and high output has increased, in the case of a cylindrical battery, optimization is underway by changing the thickness of current collectors or separators, and the size or shape of cans, top caps and the like in order to put a large quantity of electrodes in a limited space.

As one of the methods thereof, a method of utilizing copper as an outer tab as an anode current collector has been proposed. That is, the tab and separator on the outside are removed, and the copper current collector physically abuts on the cylindrical so that the current flows out.

Through this method, the input amount of the separator and the input amount of the tap can be reduced, and the outer diameter can be slightly reduced to exhibit the effects of securing space and reducing costs, and the secured space can be utilized to increase capacity or improve output. In addition, since the copper current collector directly abuts on the can, the area of transferring heat is increased, and thus, the heat generation level can be improved.

However, when copper is actually exposed on the outer shell portion, one or two points having a larger outer diameter abut on the can in accordance with the circularity of the jelly roll, which reduces the effect than previously expected.

In order to improve this, the contact level was improved by using a swelling tape that has the property of swelling up when reacting with the electrolyte, but when attaching in the manufacturing process, an air trap is generated, which causes a problem that the outer diameter increases and thus the productivity decreases.

Therefore, it is necessary to develop a jelly-roll electrode assembly and secondary battery technology that can solve these problems.

EP 2 171 790 B1 discloses a winding type electrode assembly ('jelly-roll') constructed in a structure in which a cathode sheet and an anode sheet are wound in a circle while a separator is interposed between the cathode sheet and the anode sheet or the assembly is compressed in one direction after winding, wherein the jelly-roll includes an active material non-coated portion formed at the wound end of the jelly-roll, a conductive tape attached to the wound end of the jelly-roll for covering the wound outside of the jelly-roll including the active material non-coated portion, and an elastic member attached to the inside of the active material non-coated portion, the elastic member having a thickness equivalent to 50 to 200% of the height of an active material layer, and a secondary battery including the same.

US 10 658 650 B2 relates to a secondary battery including at least: a laminated electrode body in which an electrode member and a separator are laminated, in which a suppressing member suppressing a movement of the separator with respect to the electrode member is disposed between a portion of the electrode member and a portion of the separator, in an uneven portion existing in the laminated electrode body.

### [DETAILED DESCRIPTION OF THE INVENTION]

### [Technical Problem]

It is an object of the present disclosure to provide a jelly-roll electrode assembly that can eliminate the increase in outer diameter due to an air trap caused by the attachment of the swelling tape, thus improving productivity.

The objects of the present disclosure are not limited to the aforementioned objects, and other objects which are not mentioned herein should be clearly understood by those skilled in the art from the following detailed description and the accompanying drawings.

### [Technical Solution]

According to one embodiment of the present disclosure, there is provided a jelly-roll electrode assembly in which a cathode sheet, an anode sheet, and a separator interposed between the cathode sheet and the anode sheet are wound together,
wherein the outermost side of the jelly-roll electrode assembly is wound with a non-coated portion on which no active material layer is formed on the anode sheet,
wherein in the non-coated portion of the anode sheet, a swelling tape is attached to the inner surface toward the central part of the jelly-roll electrode assembly,
wherein the swelling tape includes one or more perforated holes, and
the non-coated portion of the outermost side anode sheet on which the swelling tape is formed faces the coated portion of the anode sheet located on the inner side.

The swelling tape may be attached to a part of the inner surface of the non-coated portion of the anode sheet, and a part of the coated portion of the anode sheet in the direction of the coated portion of the anode sheet at the boundary surface between the non-coated portion and the coated portion of the anode sheet.

Here, the swelling tape may cover the coated portion of the anode sheet in a range of 0.25% to 10% of the total area of the coated portion of the anode sheet.

Alternatively, the swelling tape may be formed only on a part of the inner surface of the non-coated portion of the anode sheet.

Further, the swelling tape may be formed so as to cover 10% to 90% of the total area of the inner surface of the non-coated portion of the anode electrode sheet.

Such a swelling tape may be a single-sided or double-sided tape, wherein the single-sided or double-sided tape is not limited as long as it is a material that has chemical resistance and voltage resistance while being swelled, and may be made of at least one selected from the group consisting of polyurethane(PU), polyethylene(PE), polycarbonate(PC), polypropylene(PP), and polyimide(PI).

Alternatively, the swelling tape may have, specifically, a structure in which an adhesive layer is formed on one or both surfaces of a fabric substrate. The fabric substrate may be formed on one or both surfaces of a polyolefin substrate, for example, polyethylene (PE) or polypropylene (PP). The adhesive layer may include at least one material selected from the group consisting of polyacrylate (PA), rubber, and styrene.

Meanwhile. the diameter of the perforated holes formed in the swelling tape may be 0.1 mm to 3 mm, and the swelling tape may include two or more perforated holes, and the distance between respective perforated holes is 1 mm to 10 mm.

The perforated holes may be formed so as to have an area of 10% to 60% based on the total area of the swelling tape.

The positions of these perforated holes may be formed in a line on the winding inside in a direction perpendicular to the winding direction of the jelly-roll electrode assembly in the swelling tape, or they may be formed in a line at both ends in a direction horizontal to the winding direction of the jelly roll electrode assembly, or may be formed in the central part of the swelling tape.

Meanwhile, according to another embodiment of the present disclosure, there is provided a secondary battery comprising the jelly-roll electrode assembly.

### [BRIEF DESCRIPTION OF THE DRAWINGS]

Fig. 1 is a perspective view of a jelly-roll electrode assembly according to one embodiment of the present disclosure;
Fig. 2 is a top view of an anode sheet of a jelly-roll electrode assembly according to one embodiment of the present disclosure;
Fig. 3 is a cross-sectional view of a jelly-roll electrode assembly according to one embodiment of the present disclosure before winding;
Fig. 4 is a cross-sectional view of a jelly-roll electrode assembly according to another embodiment of the present disclosure before winding;

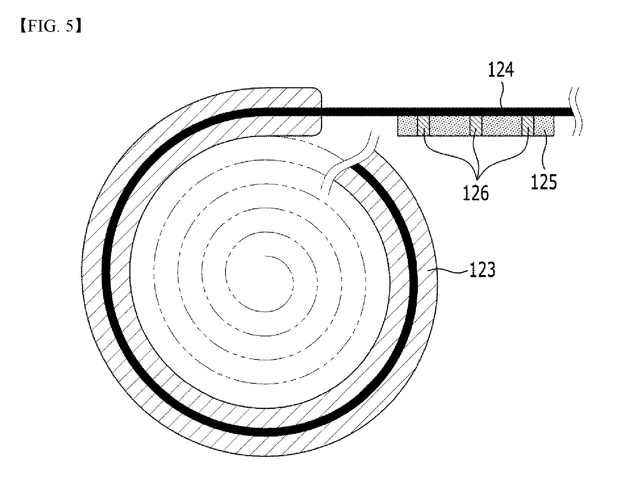

Fig. 5 is a cross-sectional view taken along A-A' of Fig. 1; and
Fig. 6 are top views of a swelling tape according to one embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

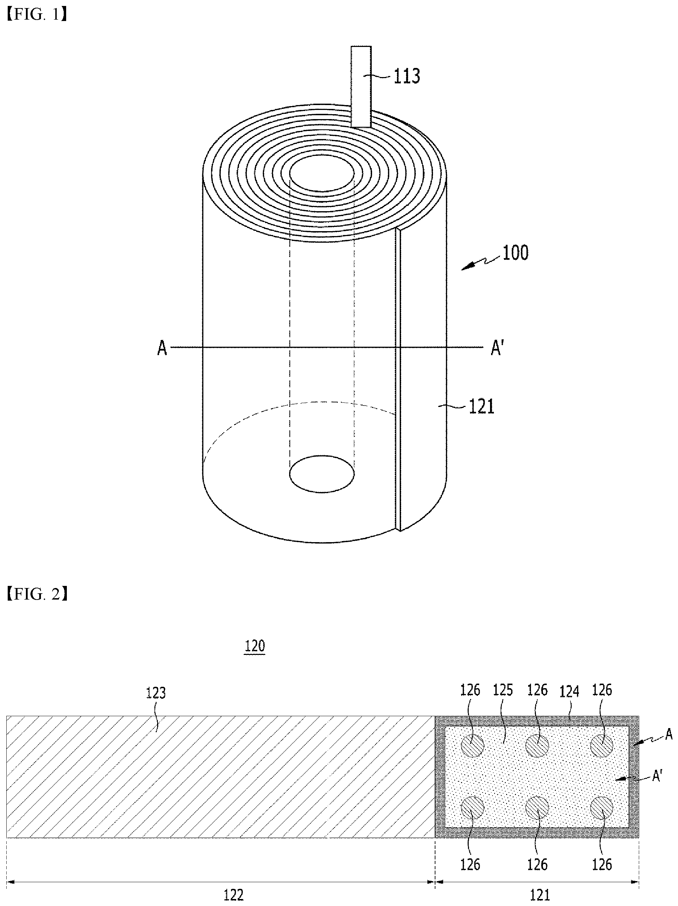

Fig. 1 is a perspective view of a jelly-roll electrode assembly according to one embodiment of the present disclosure.

Referring to Fig. 1, the jelly-roll electrode assembly 100 according to one embodiment of the present disclosure may have a shape in which a cathode sheet, an anode sheet, and a separator interposed between the cathode sheet and the anode sheet are wound together.

At this time, the cathode tab 113 may be formed on the cathode sheet, which may then be electrically connected to the cap assembly or the like of the cylindrical battery to form a cathode terminal.

Meanwhile, the outermost side of the jelly-roll electrode assembly 100 is wound with a non-coated portion 121 on which no active material layer is formed on the anode sheet, and this non-coated portion 121 then comes into contact with the inner wall surface of the can of the secondary battery. Therefore, the non-coated portion 121 of the anode sheet functions as a terminal and can be electrically and directly connected to the can, which is a cylindrical secondary battery case, and thus, may not require a separate anode tab.

In addition, since the jelly-roll electrode assembly 100 may not be formed with a separator on its outermost side, it is possible to achieve the effect of reducing the outer diameter, thereby securing the internal space of the battery, increasing the capacity, improving the energy density, and improving the battery performance and effect.

However, as described above, when the non-coated portion 121 of the anode sheet is actually exposed to the outer shell portion, there is a problem that one or two points having a larger outer diameter abut on the can in accordance with the circularity of the jelly roll, which reduces the effect than previously expected. Therefore, in the present disclosure, in order to improve this problem, a swelling tape having the property of swelling up when reacting with the electrolyte is applied.

At this time, the swelling tape has a structure attached to the inner surface toward the central part of the jelly-roll electrode assembly 100, rather than the outer shell of the non-coated portion 121 of the anode sheet of the jelly- roll electrode assembly 100, so that the non-coated portion 121 of the outermost side anode sheet can then contact the cylindrical secondary battery case as a whole, without affecting the capacity.

Therefore, such a swelling tape is not shown in Fig. 1.

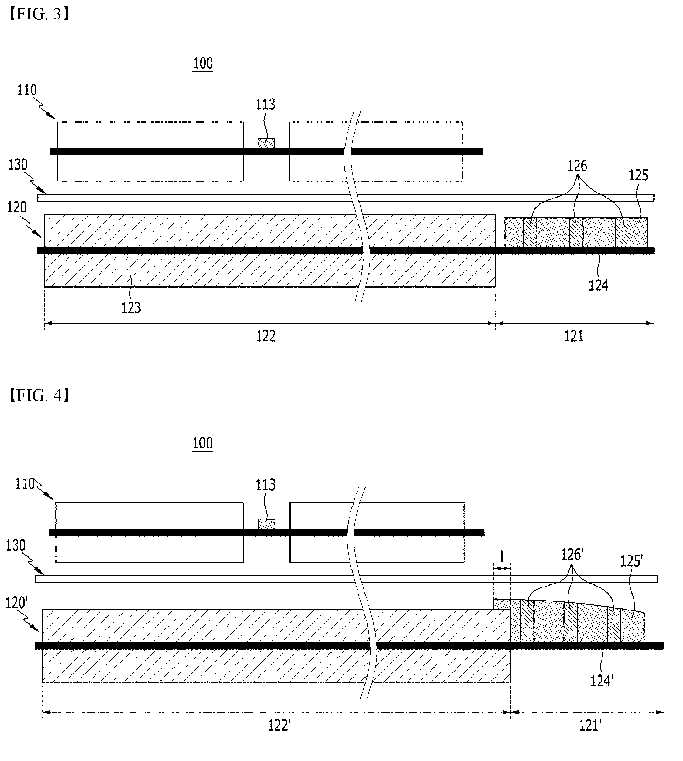

Meanwhile, in order to specifically describe the swelling tape according to the present disclosure, Fig. 2 illustrates a top view of the anode sheet 120 before winding in the jelly-roll electrode assembly 100 of Fig. 1, Fig. 3 illustrates a cross-sectional view of the jelly-roll electrode assembly 100 of Fig. 1 before winding, Fig. 4 illustrates a cross-sectional view of a jelly-roll electrode assembly 100 before winding according to another embodiment, and Fig, 5 illustrates a cross-sectional view taken along A-A' of the jelly roll electrode assembly 100 of Fig. 1.

First, referring to Figs. 2 and 3, the cathode sheet 110 includes a coated portion on which a cathode active material layer is formed and a non-coated portion on which no cathode active material layer is formed, and has a structure in which the non-coated portion is provided between the coated portions and the cathode tab 113 is attached to the non-coated portion.

Further, a separator 130 is interposed between the cathode sheet 110 and the anode sheet 120.

The cathode sheet 120 includes a coated portion 122 in which an active material layer 123 is formed on the anode current collector 124, and a non-coated portion 121 on which no active material layer 123 is formed, wherein the non-coated portion 121 is located on one side and is wound around the outermost side, thereby serving as an anode terminal.

Meanwhile, a swelling tape 125 is attached to the winding inner surface of the non-coated portion 121.

Here, the swelling tape 125 may be formed as an area (A') covering 10% to 90% of the total area (A) of the inner surface of the non-coated portion 121 of the anode sheet 120.

Further, the swelling tape 125 may be formed only on a part of the inner surface of the non-coated portion 121 so as not to overlap with the coated portion 123 of the anode sheet 120.

Alternatively, referring to Fig. 4, the swelling tape 125' may be attached to a part of the inner surface of the non-coated portion 121' of the anode sheet 120', and a part of the coated portion 122' of the anode sheet 120 in the direction of the coated portion 122' of the anode sheet 120' at the boundary surface between the non-coated portion 121' and the coated portion 122' of the anode sheet. At this time, it may be formed within a length (1) range that does not overlap with the active material layer of the facing cathode sheet 110. For example, the swelling tape may cover the coated portion of the anode sheet in the range of 0.25% to 10%, specifically 0.5% to 5% of the total area of the coated portion of the anode sheet.

However, in either case, the non-coated portion 121 of the outermost side anode sheet 120 on which the swelling tape 125 is formed faces the active material layer 123 of the anode sheet 120 located on the inner side, that is, the coated portion 122.

Therefore, since the swelling tape 125 is formed on a portion where the active material layer 123 does not face the cathode, that is, a portion that does not contribute to the capacity, the problem of capacity does not occur. At the same time, since the swelling tape 125 is formed on the inner side of the current collector 124 of the anode sheet 120 at the outermost side of the jelly-roll electrode assembly 100, the current collector 124 can contact the can of the cylindrical battery case as a whole, and thus, the effect intended by the present disclosure can be achieved without diminishing the improvement in conductivity and heat generation level.

Meanwhile, the swelling tape 125 has a property of expanding its volume when it absorbs electrolyte, and may be a single-sided or double-sided tape.

At this time, the single-sided or double-sided tape is not limited as long as it is a material that has chemical resistance and voltage resistance while being swelled. For example, it may be made of at least one selected from the group consisting of polyurethane(PU), polyethylene(PE), polycarbonate(PC), polypropylene(PP), and polyimide(PI).

Alternatively, the swelling tape 125 may have a structure in which an adhesive layer is formed on one side or both sides of the fabric substrate.

Here, the fabric substrate may be a polyolefin-based substrate, for example, polyethylene (PE) or polypropylene (PP), and the adhesive layer may include one or more materials selected from the group consisting of polyacrylate (PA), rubber, and styrene.

Meanwhile, such a swelling tape 125 includes one or more perforated holes 126.

The perforated holes 126 are holes that penetrate through the swelling tape 125 in the thickness direction.

Therefore, air trap that may be generated while attaching the swelling tape 125 to the non-coated portion 121 can be eliminated to prevent an increase in the outer diameter of the jelly-roll electrode assembly 100 that will occur therefrom, thereby improving productivity.

The shape, formation position, size and the like of the perforated holes 126 are not particularly limited as long as they are formed in a shape, formation position, and size capable of eliminating an air trap generated during attachment of the swelling tape 125.

However, in order to eliminate the air trap more effectively, the formation position, size or the like are affected.

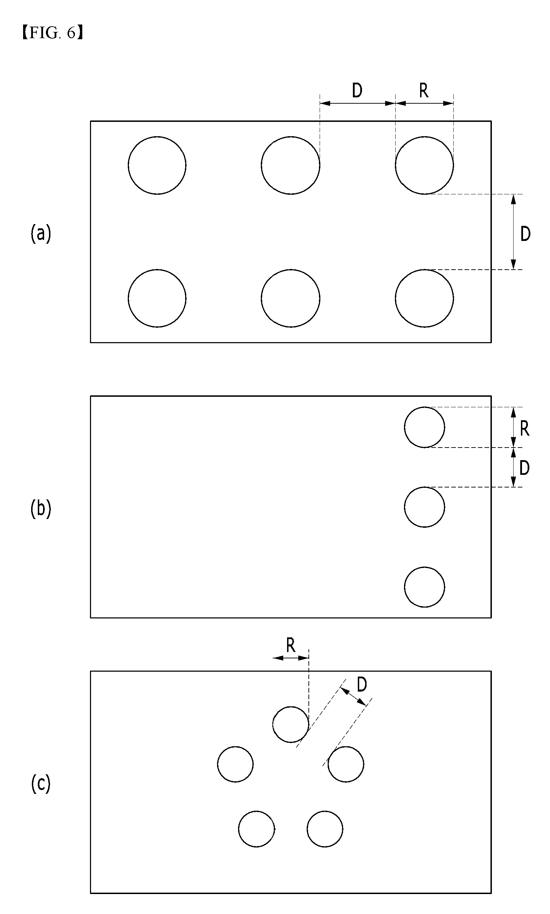

Specifically, in order to specifically describe the perforated holes 126 formed in the swelling tape 125, Fig. 6 shows examples of the swelling tape 125.

Referring to Fig. 6, a plurality of perforated holes 126 may be formed in the swelling tape 125. Specifically, the swelling tape 125 may have two or more perforated holes 126, and can be appropriately selected in consideration of the degree of air trap and the increase in contact area with the battery case due to the swelling tape 125.

At this time, the diameter (R) of the perforated holes 126 may be 0.1 mm to 3 mm, specifically 1 mm to 3 mm.

If the diameter is too small outside the above range, it is not easy to eliminate the air trap, and if the diameter is too large, the effect due to the application of the swelling tape cannot be sufficiently achieved, which is not preferable.

In addition, the distance D between the perforated holes 126 may be 1 mm to 10 mm, specifically 3 mm to 10 mm.

If the distance is too small outside the above range, the adjacent perforated holes 126 are torn apart, the size of the perforated holes 126 may increase, and the effect due to the application of the swelling tape 125 cannot be sufficiently achieved, and if the distance is too large, it is not easy to discharge the air trapped therebetween, which is not preferable.

In addition, the area occupied by the perforated holes 126 may be 10% to 60% of the total area of the swelling tape 125. If the area is too small outside the above range, it is not easy to discharge the trapped air, and if the area is too large, the effect due to the application of the swelling tape 125 cannot be achieved, which is not preferable.

Meanwhile, these perforated holes 126 may be formed before attachment, simultaneously with attachment, or after attachment of the swelling tape 125, and can be formed in a portion where air trap is well formed or a portion of not overlapping with the device used for such attachments, depending on the method of attachment.

Specifically, the perforated holes 126 may be attached to the non-coated portion of the anode sheet in a state in which they are first formed on the swelling tape 125 before attachment, or it may be formed near the portion where air is trapped simultaneously with being attached to the anode sheet, or it may be separately formed near the portion where air is trapped after the swelling tape 125 is attached.

Meanwhile, considering the method of attaching the swelling tape 125, the perforated holes 126 may be formed in a line at both ends in a direction parallel to the winding direction of the jelly-roll electrode assembly (see Fig. 6(a)), and may be formed in a line on the winding inside in a direction perpendicular to the winding direction of the jelly roll electrode assembly (Fig. 6(b)), and may be formed in the central part of the swelling tape 125 (Fig. 6(c)).

However, it is not limited to this structure, and can be formed at various positions.

Moreover, although the perforated holes 126 are shown in a circular shape in the figures, but the shape is not limited, and can be formed in a polygonal shape.

When the swelling tape 125 includes the perforated holes 126 in this way, as distortion occurs due to compression of the roller in a state where the swelling tape 125 is not properly attached when attaching the swelling tape 125, it can effectively discharge the trapped air, and thus can prevent an increase in the outer diameter of the jelly-roll electrode assembly, and the effect of improving productivity can be achieved.

The composition, structure and the like of the cathode sheet, anode sheet, and separator constituting other jelly-roll electrode assemblies are known in the art, and thus, a detailed description is omitted herein.

Meanwhile, the present disclosure provides a secondary battery including the jelly-roll electrode assembly.

At this time, the secondary battery may be a cylindrical secondary battery or a prismatic secondary battery in which the jelly-roll electrode assembly is mounted in a can.

Such a secondary battery is also known in the art, and thus, a detailed description thereof is omitted herein.

### [Description of Reference Numerals]

100: jelly-roll electrode assembly
110: cathode sheet
120: anode sheet
130: separator
113: anode tab
121 non-coated portion of anode sheet
122: coated portion of anode sheet
125: swelling tape
126: perforated holes

### [Industrial Applicability]

According to embodiments, the jelly-roll electrode assembly of the present disclosure includes a swelling tape on the inner surface of the battery non-coated portion of the outermost side anode sheet, and includes perforated holes through which the swelling tape can discharge trapped air, whereby an increase in the outer diameter of the jelly-roll electrode assembly caused by air trap can be prevented, and the productivity can be improved.

## Claims

1. A jelly-roll electrode assembly (100) in which a cathode sheet (110), an anode sheet (120, 120'), and a separator (130) interposed between the cathode sheet (110) and the anode sheet (120, 120') are wound together,
wherein the outermost side of the jelly-roll electrode assembly (100) is wound with a non-coated portion (121, 121') on which no active material layer (123) is formed on the anode sheet (120, 120'), and
in the non-coated portion (121, 121') of the anode sheet (120, 120'), a swelling tape (125, 125') is attached to the inner surface toward the central part of the jelly-roll electrode assembly (100),
**characterized in that**
the swelling tape (125, 125') includes one or more perforated holes (126), and
the non-coated portion (121, 121') of the outermost side anode sheet (120, 120') on which the swelling tape (125, 125') is formed faces the coated portion (122, 122') of the anode sheet (120, 120') located on the inner side.

2. The jelly-roll electrode assembly (100) according to claim 1, wherein:
the swelling tape (125, 125') is attached to a part of the inner surface of the non-coated portion (121, 121') of the anode sheet (120, 120'), and a part of the coated portion (122, 122') of the anode sheet (120, 120') in the direction of the coated portion (122, 122') of the anode sheet (120, 120') at the boundary surface between the non-coated portion (121, 121') and the coated portion (122, 122') of the anode sheet (120, 120').

3. The jelly-roll electrode assembly (100) according to claim 2, wherein:
the swelling tape (125, 125') covers the coated portion (122, 122') of the anode sheet (120, 120') in a range of 0.25% to 10% of the total area of the coated portion (122, 122') of the anode sheet (120, 120').

4. The jelly-roll electrode assembly (100) according to claim 1, wherein:
the swelling tape (125, 125') is formed only on a part of the inner surface of the non-coated portion (121, 121') of the anode sheet (120, 120').

5. The jelly-roll electrode assembly (100) according to claim 1, wherein:
the swelling tape (125, 125') is formed so as to cover 10% to 90% of the total area of the inner surface of the non-coated portion (121, 121') of the anode electrode sheet.

6. The jelly-roll electrode assembly (100) according to claim 1, wherein:
the swelling tape (125, 125') is a single-sided or double-sided tape.

7. The jelly-roll electrode assembly (100) according to claim 1, wherein:
the swelling tape (125, 125') has a structure in which an adhesive layer is formed on one or both surfaces of a polyolefin-based substrate.

8. The jelly-roll electrode assembly (100) according to claim 1, wherein:
a diameter of the perforated holes (126) is 0.1 mm to 3 mm.

9. The jelly-roll electrode assembly (100) according to claim 1, wherein:
the swelling tape (125, 125') includes two or more perforated holes (126), and the distance between respective perforated holes (126) is 1 mm to 10 mm.

10. The jelly-roll electrode assembly (100) according to claim 1, wherein:
the perforated holes (126) are formed so as to have an area of 10% to 60% based on the total area of the swelling tape (125, 125').

11. The jelly-roll electrode assembly (100) according to claim 1, wherein:
the perforated holes (126) are formed in a line on the winding inside in a direction perpendicular to the winding direction of the jelly-roll electrode assembly (100) in the swelling tape (125, 125').

12. The jelly-roll electrode assembly (100) according to claim 1, wherein:
the perforated holes (126) are formed in a line at both ends in a direction horizontal to the winding direction of the jelly-roll electrode assembly (100).

13. The jelly-roll electrode assembly (100) according to claim 1, wherein:
the perforated holes (126) are formed in the central part of the swelling tape (125, 125').

14. A secondary battery comprising the jelly-roll electrode assembly (100) according to claim 1.

## Patentansprüche

1. Jelly-Roll-Elektrodenanordnung (100), in der eine Kathodenfolie (110), eine Anodenfolie (120, 120') und ein Separator (130), der zwischen der Kathodenfolie (110) und der Anodenfolie (120, 120') angeordnet ist, zusammen gewickelt sind,
wobei die äußerste Seite der Jelly-Roll-Elektrodenanordnung (100) mit einem unbeschichteten Abschnitt (121, 121') gewickelt ist, auf dem keine Aktivmaterialschicht (123) auf der Anodenfolie (120, 120') ausgebildet ist, und
in dem unbeschichteten Abschnitt (121, 121') der Anodenfolie (120, 120') ein Quellband (125, 125') an der Innenfläche in Richtung des Mittelteils der Jelly-Roll-Elektrodenanordnung (100) angebracht ist,
**dadurch gekennzeichnet, dass**
das Quellband (125, 125') ein oder mehrere perforierte Löcher (126) aufweist, und
der unbeschichtete Abschnitt (121, 121') der äußersten Seitenanodenfolie (120, 120'), auf dem das Quellband (125, 125') ausgebildet ist, dem beschichteten Abschnitt (122, 122') der Anodenfolie (120, 120') zugewandt ist, der sich auf der Innenseite befindet.

2. Jelly-Roll-Elektrodenanordnung (100) nach Anspruch 1, bei der:
das Quellband (125, 125') an einem Teil der Innenfläche des unbeschichteten Abschnitts (121, 121') der Anodenfolie (120, 120') und einem Teil des beschichteten Abschnitts (122, 122') der Anodenfolie (120, 120') in der Richtung des beschichteten Abschnitts (122, 122') der Anodenfolie (120, 120') an der Grenzfläche zwischen dem unbeschichteten Abschnitt (121, 121') und dem beschichteten Abschnitt (122, 122') der Anodenfolie (120, 120') angebracht ist.

3. Jelly-Roll-Elektrodenanordnung (100) nach Anspruch 2, bei der:
das Quellband (125, 125') den beschichteten Abschnitt (122, 122') der Anodenfolie (120, 120') in einem Bereich von 0,25 % bis 10 % der Gesamtfläche des beschichteten Abschnitts (122, 122') der Anodenfolie (120, 120') bedeckt.

4. Jelly-Roll-Elektrodenanordnung (100) nach Anspruch 1, bei der:
das Quellband (125, 125') nur auf einem Teil der Innenfläche des unbeschichteten Abschnitts (121, 121') der Anodenfolie (120, 120') ausgebildet ist.

5. Jelly-Roll-Elektrodenanordnung (100) nach Anspruch 1, bei der:
das Quellband (125, 125') so ausgebildet ist, dass es 10 % bis 90 % der Gesamtfläche der Innenfläche des unbeschichteten Abschnitts (121, 121') der Anodenelektrodenfolie bedeckt.

6. Jelly-Roll-Elektrodenanordnung (100) nach Anspruch 1, bei der:
das Quellband (125, 125') ein einseitiges oder doppelseitiges Band ist.

7. Jelly-Roll-Elektrodenanordnung (100) nach Anspruch 1, bei der:
das Quellband (125, 125') eine Struktur aufweist, bei der eine Klebstoffschicht auf einer oder beiden Oberflächen eines Substrats auf Basis von Polyolefin ausgebildet ist.

8. Jelly-Roll-Elektrodenanordnung (100) nach Anspruch 1, bei der:
ein Durchmesser der perforierten Löcher (126) 0,1 mm bis 3 mm beträgt.

9. Jelly-Roll-Elektrodenanordnung (100) nach Anspruch 1, bei der:
das Quellband (125, 125') zwei oder mehr perforierte Löcher (126) aufweist und der Abstand zwischen jeweiligen perforierten Löchern (126) 1 mm bis 10 mm beträgt.

10. Jelly-Roll-Elektrodenanordnung (100) nach Anspruch 1, bei der:
die perforierten Löcher (126) so ausgebildet sind, dass sie eine Fläche von 10 % bis 60 % basierend auf der Gesamtfläche des Quellbands (125, 125') aufweisen.

11. Jelly-Roll-Elektrodenanordnung (100) nach Anspruch 1, bei der:
die perforierten Löcher (126) in einer Linie auf der Wicklungsinnenseite in einer Richtung senkrecht zu der Wicklungsrichtung der Jelly-Roll-Elektrodenanordnung (100) in dem Quellband (125, 125') ausgebildet sind.

12. Jelly-Roll-Elektrodenanordnung (100) nach Anspruch 1, bei der:
die perforierten Löcher (126) in einer Linie an beiden Enden in einer Richtung horizontal zu der Wicklungsrichtung der Jelly-Roll-Elektrodenanordnung (100) ausgebildet sind.

13. Jelly-Roll-Elektrodenanordnung (100) nach Anspruch 1, bei der:
die perforierten Löcher (126) in dem Mittelteil des Quellbands (125, 125') ausgebildet sind.

14. Sekundärbatterie mit der Jelly-Roll-Elektrodenanordnung (100) nach Anspruch 1.

## Revendications

1. Ensemble d'électrodes «jelly-roll» (100) dans lequel une feuille de cathode (110), une feuille d'anode (120, 120'), et un séparateur (130) intercalé entre la feuille de cathode (110) et la feuille d'anode (120, 120'), sont enroulés ensemble,
le côté extérieur de l'ensemble d'électrodes «jelly-roll» (100) étant enroulé avec une portion non revêtue (121, 121') sur laquelle aucune couche de matière active (123) n'est formée sur la feuille d'anode (120, 120'), et
dans la portion non revêtue (121, 121') de la feuille d'anode (120, 120'), un ruban gonflant (125, 125') étant fixé sur la surface intérieure vers la partie centrale de l'ensemble d'électrodes «jelly-roll» (100),
**caractérisé en ce que**
le ruban gonflant (125, 125') comprend un ou plusieurs trous perforés (126), et
la portion non revêtue (121, 121') de la feuille d'anode côté extérieur (120, 120'), sur laquelle le ruban gonflant (125, 125') est formé, fait face à la portion revêtue (122, 122') de la feuille d'anode (120, 120') située sur le côté intérieur.

2. Ensemble d'électrodes «jelly-roll» (100) selon la revendication 1,
le ruban gonflant (125, 125') étant fixé sur une partie de la surface intérieure de la portion non revêtue (121, 121') de la feuille d'anode (120, 120'), et une partie de la portion revêtue (122, 122') de la feuille d'anode (120, 120') dans la direction de la portion revêtue (122, 122') de la feuille d'anode (120, 120') à la surface limite entre la portion non revêtue (121, 121') et la portion revêtue (122, 122') de la feuille d'anode (120, 120').

3. Ensemble d'électrodes «jelly-roll» (100) selon la revendication 2,
le ruban de gonflement (125, 125') recouvrant la partie revêtue (122, 122') de la feuille d'anode (120, 120') dans une plage allant de 0,25 % à 10 % de la surface totale de la portion revêtue (122, 122') de la feuille d'anode (120, 120').

4. Ensemble d'électrodes «jelly-roll» (100) selon la revendication 1,
le ruban gonflant (125, 125') étant formé uniquement sur une partie de la surface intérieure de la portion non recouverte (121, 121') de la feuille d'anode (120, 120').

5. Ensemble d'électrodes «jelly-roll» (100) selon la revendication 1,
le ruban gonflant (125, 125') étant formé de façon à couvrir de 10% à 90% de la superficie totale de la surface intérieure de la portion non recouverte (121, 121') de la feuille d'électrode anodique.

6. Ensemble d'électrodes «jelly-roll» (100) selon la revendication 1,
le ruban gonflant (125, 125') étant un ruban simple face ou double face.

7. Ensemble d'électrodes «jelly-roll» (100) selon la revendication 1,
le ruban gonflant (125, 125') possédant une structure dans laquelle une couche adhésive est formée sur une des surfaces d'un substrat à base de polyoléfines ou les deux.

8. Ensemble d'électrodes «jelly-roll» (100) selon la revendication 1,
un diamètre des trous perforés (126) mesurant de 0,1 mm à 3 mm.

9. Ensemble d'électrodes «jelly-roll» (100) selon la revendication 1,
le ruban gonflant (125, 125') comprenant deux trous perforés ou davantage (126), et la distance entre les trous perforés respectifs (126) mesurant de 1 mm à 10 mm.

10. Ensemble d'électrodes «jelly-roll» (100) selon la revendication 1,
les trous perforés (126) étant formés de façon à obtenir une surface mesurant de 10 % à 60 % en fonction de la surface totale du ruban gonflant (125, 125').

11. Ensemble d'électrodes «jelly-roll» (100) selon la revendication 1,
les trous perforés (126) étant formés dans une ligne sur l'enroulement à l'intérieur dans une direction perpendiculaire à celle de l'enroulement de l'ensemble d'électrodes «jelly-roll» (100) dans le ruban gonflant (125, 125').

12. Ensemble d'électrodes «jelly-roll» (100) selon la revendication 1,
les trous perforés (126) étant formés dans une ligne aux deux bouts dans le sens horizontal au sens de l'enroulement de l'ensemble d'électrodes «jelly-roll» (100).

13. Ensemble d'électrodes «jelly-roll» (100) selon la revendication 1,
les trous perforés (126) étant formés dans la partie centrale du ruban gonflant (125, 125').

14. Batterie secondaire comprenant l'ensemble d'électrodes «jelly-roll» (100) selon la revendication 1.
